# EUROPÄISCHE PATENTSCHRIFT

(11) **EP 0 529 401 B1**
(45) Veröffentlichungstag und Bekanntmachung des Hinweises auf die Patenterteilung: **24.05.1995**
(21) Anmeldenummer: 92113668.5
(22) Anmeldetag: 11.08.1992
(51) Int. Cl.: B01D 53/18, B01D 53/14

(54) **Verfahren zur Absorption von explosionsfähigen Gasen in einer Stoffaustauschkolonne**
Process for absorption of explosive gases in a mass transfer column
Procédé pour l'absorption des gaz explosibles dans une colonne d'échange de matière

(30) Priorität: 24.08.1991 DE 4128119
(43) Veröffentlichungstag der Anmeldung: 03.03.1993
(73) Patentinhaber: BAYER AG, 51368 Leverkusen (DE)
(72) Erfinder: Börger, Götz-Gerald, Dr., W-5060 Odenthal-Osenau (DE); Listner, Uwe, Dipl.-Ing., W-5030 Hürth-Stotzheim (DE); Lüttgens, Günther, Dipl.-Ing., W-5060 Odenthal-Osenau (DE)

(56) Entgegenhaltungen:
- FR-A- 817 130
- FR-A- 2 332 050
- GB-A- 2 067 090
- GB-A- 2 086 259
- DATABASE WPI Section Ch, Week 7822, Derwent Publications Ltd., London, GB;Class A97, AN 78-38987A
- DATABASE WPI Section Ch, Week 7644, Derwent Publications Ltd., London, GB;Class A85, AN 76-82097X
- DATABASE WPI Section Ch, Week 7729, Derwent Publications Ltd., London, GB;Class A97, AN 77-51090Y

## Beschreibung

Die Erfindung betrifft ein Verfahren zur Absorption von explosionsfähigen Gasen oder Dämpfen, die durch eine mit einem Absorbens beschickte Stoffaustauschkolonne hindurchgeleitet werden.

Zur Abscheidung von Gasen oder Dämpfen werden als Absorbentien gelegentlich elektrostatisch aufladbare Flüssigkeiten eingesetzt. Die Absorption beruht dabei in der Regel auf einer rein physikalischen Bindung ohne chemische Reaktionen. Angestrebt werden Abscheidegrade >99 %. Aus diesem Grund muß ein vielstufiger Gegenstrom-Absorber eingesetzt werden. Um diesen möglichst kompakt zu halten und mit möglichst geringem gasseitigem Druckabfall betreiben zu können, werden Füllkörper mit stark durchbrochenen Oberflächen oder geordnete Packungen eingesetzt. Die Absorbens-Flüssigkeit wird von oben auf solche Packungen aufgegeben, nachdem sie zuvor eine Pumpe und mindestens einen Wärmetauscher passiert hat.

Es hat sich gezeigt, daß dabei elektrostatische Aufladungen nicht zu vermeiden sind, wenn das Absorbens einen genügend hohen spezifischen Widerstand von z.B. >10¹⁰Ω cm aufweist. Bei hohen elektrostatischen Aufladungen kommt es bekanntlich zu Funken und elektrischen Überschlägen, die eine große Gefahrenquelle darstellen, wenn explosionsfähige oder zündfähige Gase oder Dämpfe durch die Stoffaustauschkolonne hindurchgeleitet werden.

Der Erfindung liegt die Aufgabe zugrunde, die Abscheidung von explosions- oder zündfähigen Gasen, Dämpfen oder Gasgemischen in einer Stoffaustauschkolonne unter Verwendung isolierender, elektrostatisch aufladbarer Absorbentien unter solchen Bedingungen durchzuführen, daß kein Sicherheitsrisiko im Hinblick auf eine Zündung durch elektrostatische Entladungsfunken in Kauf genommen werden muß. Insbesondere muß sichergestellt werden, daß an den Stellen, an denen das Absorbens mit möglicherweise zündfähigen Gasen in Berührung steht, keine zündfähigen Entladungen auftreten können.

Diese Aufgabe wird bei Verwendung einer nicht-leitenden elektrostatisch aufladbaren Absorptionsflüssigkeit erfindungsgemäß dadurch gelöst, daß die Stoffaustauschkolonne mit einer elektrisch leitfähigen, geerdeten Packung gefüllt wird, deren Packungsdichte so groß ist, daß für jeden Punkt der Absorbensoberfläche in der durchströmten Packung der Abstand zur nächst benachbarten Stoffübergangsfläche kleiner ist als 25 mm, vorzugsweise < 15 mm.

Gemäß einer bevorzugten Ausführungsform wird der Stoffaustauschkolonne das Absorbens über bis an das obere Ende der Packung heranreichende oder in die Packung hineinreichende vollständig mit der Absorbens-Flüssigkeit gefüllte Rohre zugeführt.

Eine Weiterentwicklung ist dadurch gekennzeichnet, daß der Fuß der Kolonnenpackung in einem angestauten Absorbens-Sumpf steht, so daß in dem nicht mit der Packung gefüllten Teil der Stoffaustauschkolonne freie, in Wechselwirkung mit dem Absorbens stehende Gasräume vermieden werden.

Weiterhin erfolgt die Gaszufuhr zur Stoffaustauschkolonne vorzugsweise über eine siphonartige Zuleitung, die ebenfalls mit einem Packungsmaterial bis zu einer solchen Höhe gefüllt ist, daß das Absorbens an dieser Stelle nicht mit dem freien Gasraum oberhalb der Packung in Kontakt kommt.

Als Absorbensflüssigkeit hat sich insbesondere Silikonöl bewährt.

Mit der Erfindung wird die Zünd- und Explosionsgefahr bei der Abscheidung von explosionsfähigen Gasen, Dämpfen oder Gasgemischen in Stoffaustauschkolonnen bei Verwendung von isolierenden, elektrostatisch aufladbaren Absorptionsflüssigkeiten minimiert. Auf diese Weise können Absorptionskolonnen auch in solchen Fällen eingesetzt werden, bei denen früher ein zu großes Risikopotential bestand. Insbesondere können jetzt auch hochisolierende Absorbensflüssigkeiten verwendet werden, deren Einsatz aus den obengenannten Gründen bisher problematisch war.

Im folgenden wird die Erfindung anhand von Zeichnungen und Ausführungsbeispielen näher beschrieben. Es zeigen:
Fig. 1
   eine Versuchsapparatur zur Untersuchung der kritischen Bedingungen bei dem erfindungsgemäßen Verfahren,
Fig. 2
   eine mit speziellen Zusatzeinrichtungen für die Zuführung des Gases und der Absorbensflüssigkeit ausgestattete Absorptionskolonne zur Durchführung des erfindungsgemäßen Verfahrens und
Fig. 3
   die wechselseitige Lage der Stoffübergangsflächen in der kleinsten Zelle einer Stoffaustauschpackung.

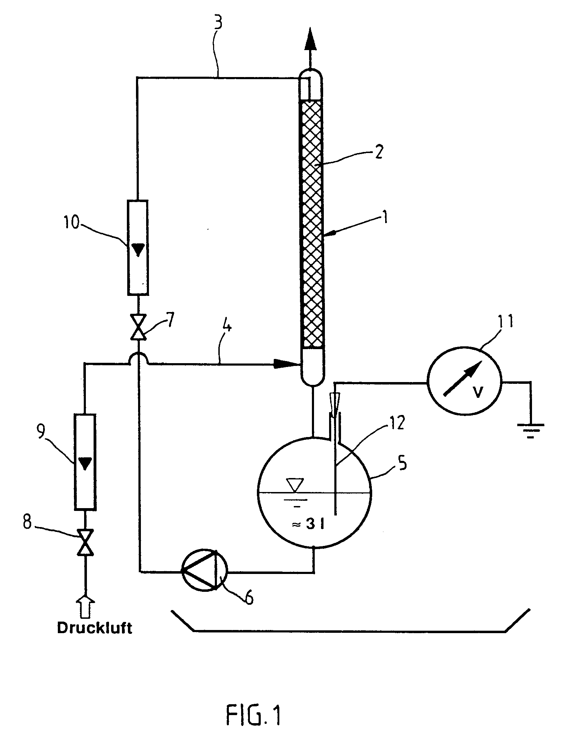

Die Versuchsanlage gemäß Fig. 1 besteht aus einer Stoffaustauschkolonne 1, die mit einer Packung 2 gefüllt ist, am oberen Ende einen Anschluß 3 für die Zuführung einer Absorbensflüssigkeit und am unteren Ende einen Anschluß 4 für die Zuführung von Druckluft aufweist. Am Sumpf der Stoffaustauschkolonne befindet sich ein Behälter 5, der mit Silikonöl vom Typ ®Baysilone M 50 gefüllt war. Das Silikonöl wird mittels einer Membranpumpe 6 umgepumpt, wobei der Mengenstrom mit dem Ventil 7 eingestellt werden kann. Der Druckluftmengenstrom, der am unteren Ende 4 der Stoffaustauschkolonne 1 zugeführt wird, kann durch das Ventil 8 eingestellt werden. Mit 9 und 10 sind Durchflußmesser in der Druckluft- und Silikonflüssigkeitsleitung bezeichnet. Die Aufladung des Silikonöls im Behälter 5 kann mit einem Spannungsmeßgerät 11 (Elektrometer) gegen Erde gemessen werden. Bei der Packung 2 handelt es sich um eine handelsübliche Edelstahl-Gewebepackung von 1000 mm Höhe, 50 mm Durchmesser und maximal 15 mm freiem Abstand zwischen den Stoffübergangsflächen.

Durch die Stoffaustauschkolonne 1 wurden 20 l ®Baysilone M 50-Silikonöl und im Gegenstrom 7 m³/h Luft geleitet. Nach 10-minütigem Betrieb wurde außen auf der Glaskolonne 1 im Bereich der Packung 2 eine maximale Aufladung von -100 kV/m gemessen. Außen am Auffangbehälter 5 lagen die Aufladungen zur gleichen Zeit bei +10 kV/m. Im Übergangsbereich von Kolonne 1 und Auffangbehälter 5 konnte keine meßbare Aufladung festgestellt werden. Diese Meßergebnisse wurden sämtlich ohne Erdung der Packung 2 erhalten. Sobald die Packung 2 geerdet wurde, waren keine Ladungen mehr meßbar. Bei erneuter Entfernung der Erde stiegen die Ladungen von oben nach unten in dem Maße an, in dem sich das Absorbens durch die Kolonne bewegte.

Durch Zugabe von submikronischen SiO₂-Partikeln müßte nach Erfahrungen mit anderen elektrostatisch aufladbaren Flüssigkeiten wegen der Schaffung großer Grenzflächen zwischen Flüssigkeit und Partikeln die Aufladespannung bei sonst gleichen Bedingungen um bis zu zwei Größenordnungen ansteigen. Nach 30 Minuten stationären Betriebes bei dem oben beschriebenen Zustand wurde dem Silikonöl SiO₂ zugemischt. Die Größe der Ladung änderte sich wider Erwarten gegenüber dem ersten Versuch nicht. Durch Erdung der Packung 2 konnte wiederum das elektrische Feld quantitativ beseitigt werden. Eine Spannungsmessung bei geerdeter Packung 2 an einer Elektrode 12, die in das Öl im Auffangbehälter 5 eintauchte, ergab eine Spannung von +40 Volt.

Selbst nach anderthalbstündigem Betrieb der Anlage ergaben sich keine Änderungen in den Meßwerten. Auch bei Vorlage von fabrikneuem Silikonöl waren die Aufladungen identisch mit den vorangegangenen Ergebnissen. Die Feldstärken blieben um den Faktor 100 unter den Erwartungen zurück.

Mit einem Hochfrequenzempfänger, der alle elektromagnetischen Wellen in seinem Nahbereich erfassen und akustisch wahrnehmbar machen kann, konnten keinerlei auf Entladungen im Inneren der Kolonne zurückzuführende Signale festgestellt werden. Diese empfindliche Meßmethode beruht darauf, daß zündfähige elektrostatische Entladungen immer elektromagnetische Wellen erzeugen. Aus dem negativen Ergebnis kann geschlossen werden, daß das elektrostatisch aufgeladene Öl im Inneren der Packung 2 keine detektierbaren elektrostatischen Entladungen erzeugt. Dieses Ergebnis ist auf die große Dichte der Packung 2 zurückzuführen. Aufgrund der geringen Gitterabstände in der Packung können sich an keiner Stelle so hohe Ladungen ansammeln, daß ein Ladungsausgleich durch Funkenüberschlag stattfindet.

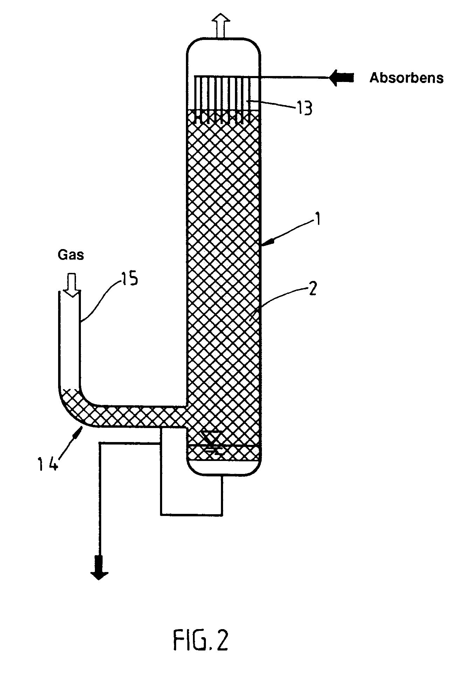

Aufgrund dieses Befundes wurde die in Fig. 2 dargestellte Vorrichtung zur Vermeidung zündfähiger, durch elektrostatische Entladung erzeugter Funken entwickelt.

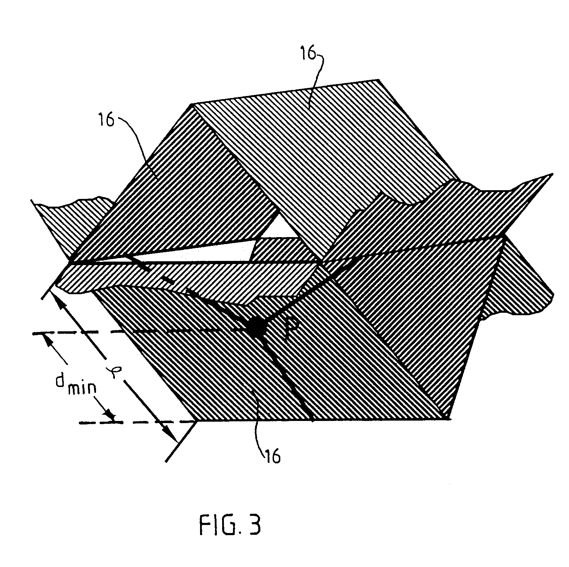

Eine konventionelle zylindrische, stehende Stoffaustauschkolonne 1 ist im Inneren mit elektrisch leitfähigen Füllkörpern oder geordneten Packungen, z.B. aus Metall, graphitähnlichem Material oder einem elektrisch leitfähigen Kunststoff mit einer spezifischen Oberfläche von z.B. 500 m²/m³ dicht gepackt. Die Geometrie einer Elementarzelle dieser Packung ist in Fig. 3 dargestellt.

Packung 2 und Kolonne 1 sind geerdet. Bei der Auswahl einer geeigneten Packung ist das Kriterium maßgebend, daß der Abstand zwischen einem beliebigen Punkt der bei der Absorption gebildeten, gasseitigen Absorbens-Oberfläche und dem nächstgelegenen Punkt einer durch eine Gasschicht von ihr getrennten festen Oberfläche kleiner ist als ein empirisch bestimmbarer kritischer Abstand dₘᵢₙ. Der Grenzabstand dₘᵢₙ ist dadurch definiert, daß die aus einer Ladungsanhäufung an irgendeiner Stelle der Packung resultierende elektrische Energie bei Abständen d < dₘᵢₙ unterhalb eines Grenzwertes bleibt, der stark genug wäre, um ein zündfähiges Gemisch der Ex-Klasse IIC entzünden zu können. Typische Beispiele für zündfähige Gemische der Ex-Klasse IIC sind Wasserstoff-Knallgas, Acetylen-Luft, Schwefelkohlenstoff-Luft (vgl. z.B. das Buch von Nabert, Schön; Sicherheitstechnische Kennzahlen, Deutscher Eichverlag, Berlin). Diese Bedingung kann in der Praxis erfüllt werden, wenn der Abstand (Gitterabstand) von zwei benachbarten Stoffübergangsflächen in der Packung < 25 mm, vorzugsweise < 15 mm ist. Nach diesen Gesichtspunkten muß also die Packung ausgewählt werden, um das erfindungsgemäße Verfahren durchzuführen. Bei dem Ausführungsbeispiel nach Fig. 2 betrugen die freien Abstände innerhalb der Packung mit Sicherheit weniger als 20 mm.

Als Absorbens wurde, wie bei dem Versuch nach Fig. 1, ein elektrisch hochisolierendes Silikonöl vom Typ ®Baysilone M 50 verwendet. Das Absorbens wurde am Kopf der Packung 2 über einen Rohrverteiler 13 zugeführt, wobei darauf geachtet wurde, daß die in die Packung hineinreichenden Rohre des Verteilers 13 stets mit der Absorbensflüssigkeit gefüllt waren. Dadurch kann am Kopf der Packung 2 ebenfalls die Bedingung eingehalten werden, daß sich keine freien Flüssigkeitsschichten ausbilden können, die in irgendeiner Richtung durch den Gasraum mehr als 20 mm Abstand von der nächsten geerdeten Fläche haben. Am Kolonnenfuß wird das Absorbens mittels eines Syphons 14 bis in die Packung 2 hinein gestaut. Auf diese Weise werden ebenfalls in dem nicht mit der Packung gefüllten unteren Ende der Stoffaustauschkolonne 1 freie, in Wechselwirkung mit dem Absorbens stehende Gasräume vermieden. Die Zuführung des zu reinigenden Gasgemisches erfolgt in die ebenfalls mit dem Packungsmaterial ausgefüllte Syphonleitung, so daß im freien Gasraum der Zuleitung 15 kein Kontakt der Absorbensflüssigkeit mit dem Gasgemisch stattfinden kann.

Der Betrieb einer solchen Stoffaustauschkolonne unterliegt im Vergleich zu üblichen Absorptionskolonnen keinen zusätzlichen Beschränkungen. Es kann z.B. bei der Verwendung von ®Baysilone M 50 als Absorbens und BX-Packungen der Firma Sulzer AG in Kolonnen mit einer Berieselungsdichte B von 10 m³/m²h und einem Gasbelastungsfaktor von 1,2 m/s √k̅g̅/̅m̅³̅ gearbeitet werden.

In Fig. 3 ist eine Elementarzelle der Packung mit rechtwinklig zueinander orientierten und rechtwinklig gefalzten Schichten 16 dargestellt. Die eingezeichneten dicken schwarzen Linien verbinden den am ungünstigsten gelegenen Punkt P der Absorbensschicht mit den nächst benachbarten Stoffübergangsflächen. Auf die Einhaltung eines kritischen Grenzwertes (obere Grenze dₘᵢₙ) wurde oben schon hingewiesen. Der Gitterabstand der Packung (Abstand zweier benachbarter Stoffaustauschflächen) ist hier mit 1 bezeichnet.

## Patentansprüche

1. Verfahren zur Absorption von explosionsfähigen Gasen oder Dämpfen, die durch eine mit einem Absorbens beschickte und mit einer elektrisch leitfähigen Packung gefüllte Stoffaustauschkolonne hindurchgeleitet werden, dadurch gekennzeichnet,
a) daß die Packung (2) der Stoffaustauschkolonne (1) geerdet wird,
b) daß als Absorptionsflüssigkeit eine nichtleitende, elektrostatisch aufladbare Flüssigkeit verwendet wird und
(c) daß für jeden Punkt der Absorbensoberfläche in der durchströmten Packung (2) die Bedingung erfüllt ist, daß der Abstand zur nächst benachbarten Stoffübergangsfläche kleiner ist als 25 mm.

2. Verfahren nach Anspruch 1, wobei der Abstand zur nächst benachbarten Stoffübergangsfläche ≦ 15 mm. ist.

3. Verfahren nach Anspruch 1 oder 2 wobei der Abstand zur nächst benachbarten Stoffübergangsfläche ≦ 10 mm. ist.

4. Verfahren nach Anspruch 1 bis 3, dadurch gekennzeichnet, daß der Kolonne (1) das Absorbens über bis an das obere Ende der Packung (2) heranreichende oder in die Packung (2) hineinreichende, vollständig mit der Flüssigkeit gefüllte Rohre (13) zugeführt wird.

5. Verfahren nach Anspruch 1 bis 4, dadurch gekennzeichnet, daß der Fuß der Kolonnenpackung in einem angestauten Absorbens-Sumpf steht, so daß in dem nicht mit der Packung gefüllten Teil der Kolonne (1) freie, in Wechselwirkung mit dem Absorbens stehende Gasräume vermieden werden.

6. Verfahren nach Anspruch 1 bis 5, dadurch gekennzeichnet, daß die Gaszufuhr zur Kolonne über eine siphonartige Zuleitung (14) erfolgt, die ebenfalls mit einem Packungsmaterial bis zu einer solchen Höhe gefüllt ist, daß das Absorbens nicht mit dem freien Gasraum oberhalb des mit der Packung gefüllten Teils in Kontakt kommt.

7. Verfahren nach Anspruch 1 bis 6, dadurch gekennzeichnet, daß Silikonöl als Absorbens verwendet wird.

8. Adsorptionskolonne zur Durchführung des Verfahrens nach Anspruch 1 bis 7, mit einer geordneten Packung (2), dadurch gekennzeichnet, daß der Gitterabstand der Packung (2) <25 mm ist, daß die elektrisch leitfähige Packung (2) geerdet ist, daß am oberen Ende der Kolonne (1) zur Aufgabe und Zuführung der Absorbensflüssigkeit bis ans obere Ende der Packung heranreichende oder bis in die Packung hineingeführte Rohre (13) vorgesehen sind und daß am unteren Ende der Kolonne eine siphonartige, ebenfalls mit einer Packung gefüllte Gaszuführungsleitung (14) angeschlossen ist.

## Claims

1. A process for the absorption of explosive gases or vapours which are passed through a mass transfer column charged with an absorbent and filled with an electrically conductive packing, characterised in that
a) the packing (2) of the mass transfer column (1) is earthed,
b) the absorption liquid used is a non-conductive, electrostatically chargeable liquid and
c) for every point on the surface of the absorbent in the packing (2) through which the gas flows, the condition is met that the distance from the nearest adjacent mass transfer surface is smaller than 25 mm.

2. A process according to claim 1, wherein the distance to the nearest adjacent mass transfer surface is less than or equal to 15 mm.

3. A process according to claim 1 or 2, wherein the distance to the nearest adjacent mass transfer surface is less than or equal to 10 mm.

4. A process according to claim 1 to 3, characterised in that the absorbent is supplied to the column (1) via pipes (13) completely filled with the liquid and extending as far as the upper end of the packing (2) or into the packing (2).

5. A process according to claim 1 to 4, characterised in that the foot of the column packing is in a sump of accumulated absorbent in order to prevent the formation of free gas spaces interacting with the absorbent in the part of the mass transfer column (1) not filled with packing.

6. A process according to claim 1 to 5, characterised in that the gas is supplied to the column via a siphon-like duct (14), which is also filled with packing material to a sufficient height that the absorbent does not come into contact with the free gas space above the part filled with packing.

7. A process according to claim 1 to 6, characterised in that silicone oil is used as an absorbent.

8. Adsorption column for carrying out the process according to claim 1 to 7, having an ordered packing (2), characterised in that the lattice size of the packing (2) <25 mm, in that the electrically conductive packing (2) is earthed, in that for discharging and supplying the absorbent liquid (1) pipes (13) are provided which extend to the upper end of the packing or extend into the packing, and in that a siphon-type gas supply pipe (14) also filled with packing is connected to the lower end of the column.

## Revendications

1. Procédé pour l'absorption de gaz ou de vapeurs explosibles, qu'on fait passer à travers une colonne d'échange de matière chargée d'un absorbant et remplie avec un garnissage électriquement conducteur, caractérisé
a) en ce que le garnissage (2) de la colonne d'échange de matière (1) est mis à la terre,
b) en ce qu'on utilise comme liquide d'absorption un liquide non conducteur, pouvant être électrostatiquement chargé et
c) en ce que pour chaque point de la surface d'absorbant dans le garnissage (2) traversé la condition, que la distance à la surface de transfert de matière la plus proche est plus petite que 25 mm, est remplie.

2. Procédé selon la revendication 1, dans lequel la distance à la surface de transfert de matière la plus proche est inférieure ou égale à 15 mm.

3. Procédé selon la revendication 1 ou 2, dans lequel la distance à la surface de transfert de matière la plus proche est inférieure ou égale à 10 mm.

4. Procédé selon la revendication 1 à 3, caractérisé en ce qu'on introduit dans la colonne (1) l'absorbant par l'intermédiaire de tuyaux (13) complètement remplis avec le liquide atteignant l'extrémité supérieure du garnissage (2) ou passant dans le garnissage (2).

5. Procédé selon la revendication 1 à 4, caractérisé en ce que le pied du garnissage de colonne se trouve dans une queue-absorbant refoulée, de sorte qu'on peut éviter dans la partie de la colonne (1) non remplie avec le garnissage des espaces gazeux libres se trouvant en interaction avec l'absorbant.

6. Procédé selon la revendication 1 à 5, caractérisé en ce que l'alimentation de la colonne en gaz se fait par l'intermédiaire d'une canalisation (14) de type siphon, qui est également remplie avec un matériau de garnissage jusqu'à une hauteur telle que l'absorbant ne vient pas en contact avec l'espace gazeux libre au-dessus de la partie remplie avec le garnissage.

7. Procédé selon la revendication 1 à 6, caractérisé en ce qu'on utilise de l'huile de silicone comme absorbant.

8. Colonne d'absorption pour la réalisation du procédé selon la revendication 1 à 7, munie d'un garnissage ordonné (2), caractérisée en ce que la distance de grille du garnissage (2) est inférieure à 25 mm, en ce que le garnissage électriquement conducteur (2) est mis à la terre, en ce qu'à l'extrémité supérieure de la colonne (1) sont prévus des tuyaux (13) passant jusque dans le garnissage ou atteignant l'extrémité supérieure du garnissage pour la charge et l'alimentation du liquide absorbant et en ce qu'à l'extrémité inférieure de la colonne est raccordée une canalisation d'alimentation en gaz (14) de type siphon, également remplie d'un garnissage.
